Europäisches Patentamt

**European Patent Office**

**Office européen des brevets**

(19)

(11) Publication number: **0 049 993**

**A1**

(12) # EUROPEAN PATENT APPLICATION

(21) Application number: **81304624.0**

(22) Date of filing: **06.10.81**

(51) Int. Cl.³: **E 04 B 1/60**
**F 16 B 5/07**

(30) Priority: **13.10.80 GB 8033001**

(43) Date of publication of application:
**21.04.82 Bulletin 82/16**

(84) Designated Contracting States:
**DE GB IT NL SE**

(71) Applicant: **SIR ROBERT MCALPINE AND SONS (TRADE INVESTMENTS) LIMITED**
**40 Bernard Street**
**London, W.C.1(GB)**

(72) Inventor: **Allan, John Skanor**
**West Hill**
**Bembridge Isle of Wight(GB)**

(74) Representative: **Carpmael, John William Maurice et al,**
**CARPMAELS & RANSFORD 43 Bloomsbury Square**
**London, WC1A 2RA(GB)**

(54) **Method of attaching a structural element.**

(57) A method of attaching a structural element (3) to a structure (1) in which an attachment member (7) with raised portions such as ribs or pegs on its face is bonded to the structural element. When in position the raised portions engage corresponding recessed portions on a second attachment member (6) bonded to the structure (1) or on an intermediate attachment member (19). The engagement transmits shear forces between the structural element and the structure. Releasable locking means such as bolts (9) hold the structural element in position and resist outward movement. Clearance holes (8) around the bolts prevent lock stresses when shear forces are applied.

FIG.2.

EP 0 049 993 A1

Croydon Printing Company Ltd.

## Method of attaching a structural element

The present invention relates to a method of attaching a structural element to a structure and to the construction of such a structural element.

Metal or reinforced plastics structural elements have been conventionally attached to structures using mechanical fasteners such as bolts or rivets. It was found however that shear forces between the structural elements which act perpendicularly to the bolt or rivet axis caused high stress concentrations in the local areas around the bolt or rivet holes in the structural elements, with a consequent reduction in fatigue strength particularly in the case of fibre reinforced plastics materials. This has been overcome by using adhesives or welding or brazing to bond the structural elements to the structure but a bonded structure introduces problems of inspection and replacement of component parts since it is difficult to remove structural elements once they have been bonded into place.

According to one aspect of the present invention there is provided a method of attaching a structural element to a structure in a required position, comprising bonding an attachment member to the structural element at a position such that, when the structural element is in its required position, raised portions of a face of the attachment member fit into matching recessed portions of a face on part of the structure so as to transmit shear forces in a direction parallel to the said faces, and when the structural element is in its required position applying releaseable locking means to resist movement of the attachment member away from that part of the structure in a direction perpendicular to the said faces.

This method uses both mechanical interlocking of the attachment member to the structure and the bonding of it to the structural element in order to transmit shear forces between the structural elements and the structure and is thus able to combine the elimination of local stresses in the structural elements achieved by using adhesives or welding or brazing with the ability to remove the structural element when required.

Preferably, the recessed portions on the structure are provided by a second attachment member bonded to a part of the structure.

Advantageously, the locking means are bolts whose shafts pass through clearance holes in the structure and/or the structural element, or are parts of the attachment member which engage corresponding parts of the structure.

According to another aspect of the present invention there is provided a structural element for attachment to a structure in a required position, including an attachment member bonded to the structural element and having raised portions on a face thereof which fit into matching recessed portions of a face on part of the structure when the structural element is in its required position so as to transmit shear forces in a direction parallel to the said faces, and releasable locking means engageable with the structure so as to resist movement of the attachment member away from the said part of the structure in a direction perpendicular to the said faces when the structural element is in its required position.

In one preferred construction the attachment member is in strip form with raised transverse ribs on its surface. In another preferred construction the attachment member has an irregular pattern of pegs on its surface.

Various methods and constructions for attaching structural elements will now be described by way of example and with reference to the accompanying drawings, in which:

Figure 1 is a sectional perspective view of two structural elements attached together;

Figure 2 is a sectional view of an attachment arrangement;

Figure 3 is a top view of one part of the attachment arrangement of Figure 2;

Figures 4 and 5 are views similar to that in Figure 3 of two further attachment arrangements; and

Figure 6 is a sectional view of another attachment arrangement, attaching three structural elements together.

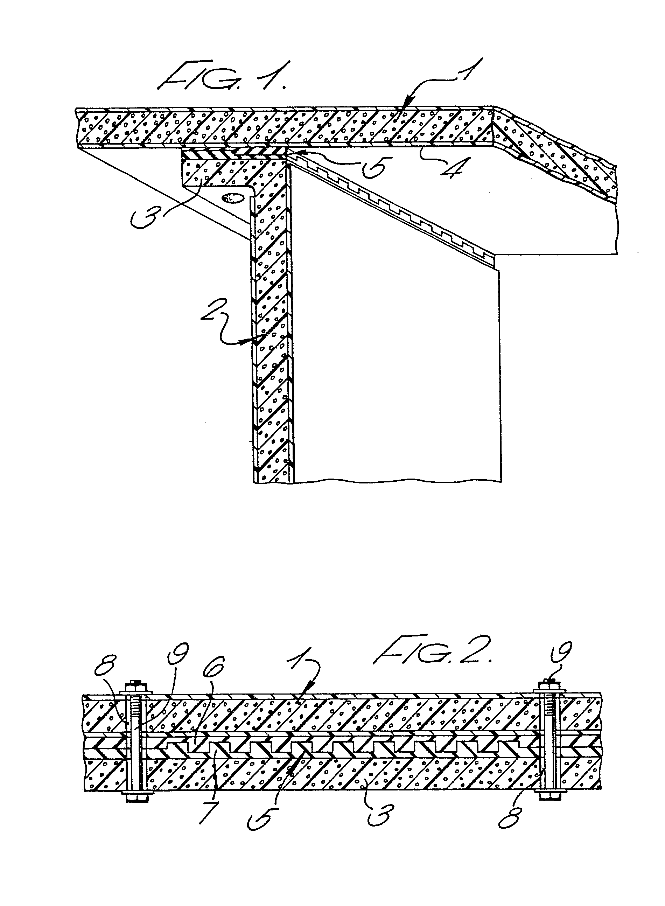

Referring to Figure 1, structural elements 1, 2 are shown attached together along a flange 3 of the element 2. These elements may be made of metal, ceramic or plastics, or any other materials which can be chemically bonded using a suitable bonding material, but in the particular example shown they are panels of plastics honeycomb sandwich construction with the outer skins 4 made of carbon-fibre reinforced plastics material. The structural elements are part of a larger structure, each element of which is attached to the structure in the same manner as the elements 1 and 2.

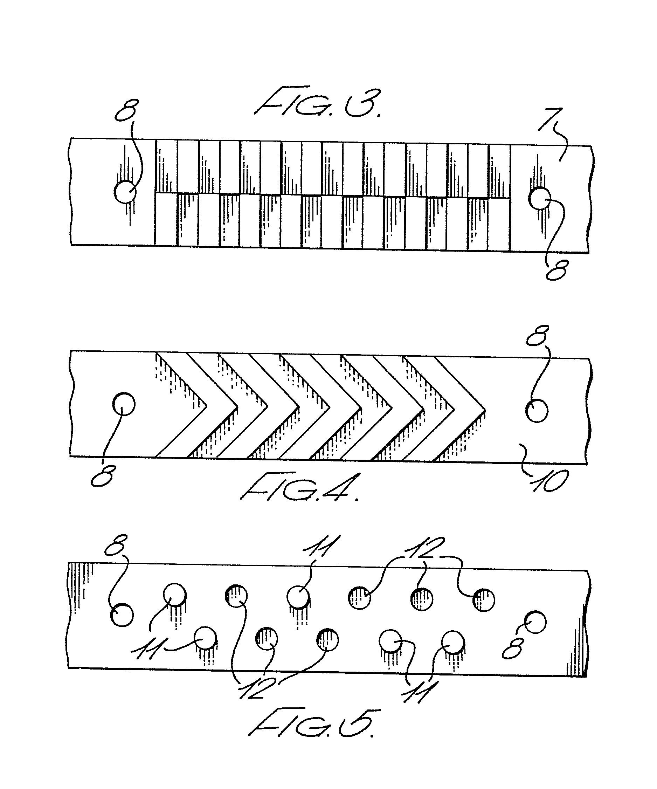

Between the structural element 1 and the flange 3 of the structural element 2 is a strip 5, which as shown in more detail in Figure 2, comprises two attachment members 6,7. The attachment member 6 is bonded on one face to the structural element 1 and has on its opposite face a raised toothed pattern which meshes with a complementary raised toothed pattern on the attachment member 7, which is bonded on its opposite face to the flange 3 of the structural element 2. At intervals along the strip 5 are reference holes 8 which are aligned with corresponding holes in the structural elements 1, 2 and through which are positioned bolts 9. The bolts 9 have shafts of smaller diameter than the holes 8 and hold the two attachment members in engagement with one another.

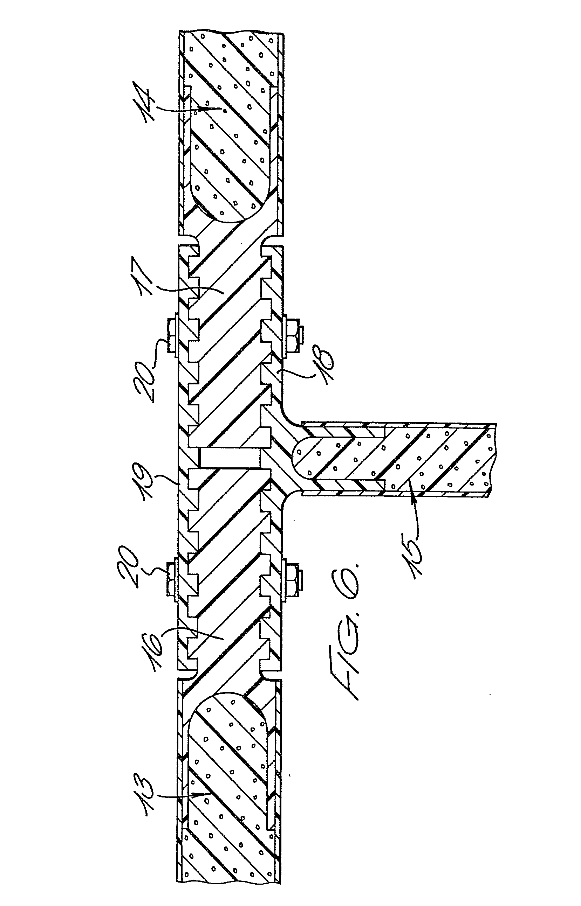

As long as the attachment members 6, 7 are held together by the bolts 9, the interlocking teeth will prevent shear movement of the structural elements in the direction of the strip 5, and by using a staggered pattern of teeth as in Figure 3 shear movement in all other directions parallel to the plane of the strip 5 can also be prevented. Removal of the bolts 9 allows the structural elements to be easily detached from one another for inspection or replacement and the reference holes 8 serve to locate the elements in the correct positions when re-attaching them.

Since the bolts 9 are of smaller diameter than the holes 8 there is no stress force on the structural elements in the region of the holes as would be the case if the elements were simply bolted together without the use of the attachment members 6, 7.

Figure 4 shows an attachment member 10 having teeth in the form of a chevron instead of the staggered rows in Figure 3. This form also permits a shear transfer in any direction but takes the major loading along the strip. In other respects the attachment member 10 of Figure 4 is used in the same way as that of Figure 3, interlocking with a second attachment member bonded to a part of the structure and having teeth of similar but complementary configuration. Other interlocking patterns of raised teeth may also be used provided they will transmit shear forces between the attachment members.

Figure 5 shows an attachment member 10' which differs from those shown in Figures 3 and 4 in that it has irregularly placed pegs 11 and bores 12 instead of raised teeth. The pegs 11 fit into similarly placed bores in a second attachment member and the bores 12 receive similarly placed pegs in the second attachment member, the attachment members being bonded to the structural elements in the same way as in Figure 2.

The irregular placing of the pegs 11 and bores 12 means that the two attachment members interlock in only one position so that it is not necessary to use the reference holes 8 to locate the structural elements in their correct positions as in the embodiment of Figures 1 to 4. Some means of preventing the attachment members from separating is however still required and this is provided by shaping part of one attachment member so that it clips onto the other attachment member when they are pressed together.

All the attachment arrangements described so far have been for attaching structural elements in a face to face configuration as shown in Figure 1.

In Figure 6 is shown a different configuration in which two structural elements 13,14 are in an edge to edge configuration and a third element 15 is attached to them at its edge. Each element 13, 14, 15 has an attachment member 16, 17, 18 bonded to it at its edge, the attachment member having a pair of legs which extend over the faces of the element adjacent its edge so as to give a large area bond. The attachment members 16 and 17 extend outwards from the edges of the respective elements 13 and 14 and have raised teeth on their faces parallel to the faces of the structural elements. These teeth are in a pattern such as that shown in Figure 3 or Figure 4. The attachment member 18 has a face perpendicular to the faces of the structural element 15 which carries raised teeth in a complementary pattern to that on the attachment members 16 and 17, as does a further attachment member 19. When the attachment members 18 and 19 are interlocked with the attachment members 16 and 17 as shown in Figure 6 the meshing teeth prevent shear movement of the panels 13 and 14 away from one another. Dis-engagement of the attachment members from one another is prevented, as in the arrangements shown in Figures 2 to 4, by bolts 20 fitting through clearance holes in the attachment members. This arrangement allows direct, shear and bending loads to be transmitted between the panels. Direct attachment of just the two panels 13 and 14 is possible by replacing the attachment member 18 by a member similar to the attachment member 19.

In the arrangement of Figure 6 the attachment member 16 bonded to the panel 13 does not fit directly against the attachment member 17 but uses an intermediate attachment member 19, 18. This differs from the direct interlocking of the attachment members in the arrangements shown in Figures 1 to 5 but since the intermediate attachment members may be considered as effectively part of the structure to which the panel 13 is to be attached the essential method of attachment is the same. Indeed it would be possible to interpose an intermediate attachment member between the attachment members 6 and 7 in Figure 2 if required. This can be of benefit by leading to uniform loading of the teeth and the bond film.

The attachment members in all the above described arrangements must be made of a material which can resist shear forces on raised portions of its surface such as fibre or fabric reinforced plastics, nylon and rubber. Only materials of high immunity to crack propogation and change of section can be used for appreciable fatigue strength. A preferred material is carbon fibre reinforced plastics which is almost completely immune to rapid changes of section. The material should also be compatible with the adhesive which is to be used to bond the attachment member to the structural element, although it is possible to use an intermediate or catalytic, film to ensure compatibility. In some cases brazing or welding can be used instead of an adhesive or other chemical bond.

The ultimate limit on the shear stress which can be transmitted between the structural element and the structure is set by the strength of the bond and the attachment members need not be stronger than this. A typical shear stress on the attachment members would be approximately 3.5 MPa. However, some small deflection of the attachment members under load may occur particularly if they are made of an elastomeric material.

CLAIMS

1.      A method of attaching a structural element to a structure in a required position, comprising bonding an attachment member to the structural element at a position such that, when the structural element is in its required position, raised portions of a face of the attachment member fit into matching recessed portions of a face on part of the structure so as to transmit shear forces in a direction parallel to the said faces, and when the structural element is in its required position applying releasable locking means to resist movement of the attachment member away from the structure in a direction perpendicular to the said faces.

2.      A method according to claim 1, wherein the part of the structure carrying the recessed portions is an intermediate attachment member attached to the structure by raised portions of a face of the intermediate attachment member fitting into matching recessed portions of a face on another part of the structure so as to transmit shear forces in a direction parallel to the said faces, the releasable locking means resisting movement of the intermediate attachment member away from the structure in a direction perpendicular to the said faces.

3.      A method according to claim 2, wherein the intermediate attachment member is bonded to a further structural element.

4.      A method according to any preceding claim, wherein the recessed portions on the structure are provided by a second attachment member bonded to a part of the structure.

5.      A method according to any preceding claim, wherein the releasable locking means comprise at least one bolt, the bolt shank passing through a clearance hole in one of the said faces.

6.      A method according to any one of claims 1 to 4, wherein the releasable locking means comprise parts of the attachment member which engage corresponding parts of the structure.

7.      A method according to any preceding claim, wherein the recessed portions are arranged in an irregular pattern.

8.     A structural element for attachment to a structure in a required position, having an attachment member bonded to the structural element and having raised portions on a face thereof which fit into matching recessed portions of a face on part of the structure when the structural element is in its required position so as to transmit shear forces in a direction parallel to the said faces, and releasable locking means engageable with the structure so as to resist movement of the attachment member away from the structure in a direction perpendicular to the said faces when the structural element is in its required position.

9.     A structural element according to claim 8, wherein the attachment member is of laminar form and is bonded to the structural element by its face remote from the face carrying the raised portions.

10.     A structural element according to claim 8, wherein the attachment member is rigid and protrudes outwardly from the structural element.

11.     A structural element according to claim 10, wherein the attachment member has the raised portions on opposite parallel faces thereof.

12.     A structural element according to any one of claims 8 to 11, wherein the raised portions are parallel ribs.

13.     A structural element according to claim 12, wherein the ribs are staggered along their length.

14.     A structural element according to claim 12, wherein the ribs are bent.

15.     A structural element according to any one of claims 8 to 11, wherein the raised portions are a plurality of pegs.

16.     A structural element according to claim 15, wherein the pegs are arranged in an irregular pattern.

FIG. 1.

FIG. 2.

FIG.3.

FIG.4.

FIG.5.

0049993

14

17

20

18

19

20

15

16

13

FIG. 6.

## DOCUMENTS CONSIDERED TO BE RELEVANT

| Category | Citation of document with indication, where appropriate, of relevant passages | Relevant to claim |
|---|---|---|
| | FR - A - 2 434 947 (LAMBERET) <br><br> * page 3, line 9 to page 4, line 20; page 5, lines 8-15; figures 1,2 * | 1,6,8, 10,12 |
| | US - A - 3 263 386 (KIMMEL) <br><br> * column 1, lines 51-63; column 2, lines 20-27, 40-43, 55-68; figure 2 * | 1,5,8, 10 |
| | US - A - 3 942 290 (O'SHEERAN) <br><br> * column 3, line 34 to column 4, line 18; column 4, line 63 to column 5, line 11; column 5, lines 18-48; figures 2,3,4,7,9 * | 1,2,3, 4,8,10, 11,12 |
| | US - A - 3 742 663 (DUSKIN) <br><br> * column 1, lines 38-56; column 2, lines 5-55; column 3, lines 6-29; figures 1-3 * | 1,5,7, 8,9 |

**CLASSIFICATION OF THE APPLICATION (Int. Cl. 3)**

E 04 B 1/60
F 16 B 5/07

**TECHNICAL FIELDS SEARCHED (Int.Cl. 3)**

E 04 B
F 16 B

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 19-01-1982 | CAVALERI |

EPO Form 1503.1  06.78